# FASCICULE DE BREVET EUROPEEN

(11) **EP 0 443 932 B1**
(45) Date de publication et mention de la délivrance du brevet: **10.11.1993**
(21) Numéro de dépôt: 91400427.0
(22) Date de dépôt: 18.02.1991
(51) Int. Cl.: C10C 3/02, C08L 95/00

(54) **Compositions bitumineuses renfermant des résidus de polymères hydrolysés ou alcoolysés**
Hydrolysierte oder alkoholisierte Polymerreste enthaltende Bitumenzusammensetzungen
Bituminous compositions containing hydrolysed or alcoholysed polymer residues

(30) Priorité: 21.02.1990 FR 9002139
(43) Date de publication de la demande: 28.08.1991
(73) Titulaire: INSTITUT FRANCAIS DU PETROLE, 92502 Rueil-Malmaison (FR)
(72) Inventeur: Dawans, François, F-78380 Bougival (FR)

(56) Documents cités:
- DE-A- 2 418 977
- FR-A- 1 522 404

## Description

Les polymères sont couramment utilisés comme additifs dans les asphaltes et bitumes routiers ou industriels, soit pour améliorer leurs propriétés de mise en oeuvre en modifiant les propriétés rhéologiques à chaud, soit pour améliorer leurs propriétés physicochimiques (fragilité à froid, tenacité, flexibilité, stabilité, susceptibilité thermique, résistance mécanique, aux chocs, aux vibrations, à l'abrasion...).

En général, les polymères utilisés sont des thermoplastiques (polymères ou copolymères d'oléfines), des caoutchoucs et, en particulier, des élastomères thermoplastiques (copolymères multiséquencés de dioléfines et de styrène), ou, dans une moindre mesure, des résines thermodurcissables (polyuréthanes, époxy, phénol-formol). Selon l'art antérieur, ces polymères peuvent être utilisés seuls ou en mélanges. Par exemple, on a proposé de recycler, comme additifs dans les bitumes, des déchets de fabrication (cires de polyéthylène, polypropylène atactique, alcool polyvinylique, poudrettes de caoutchoucs vulcanisés...) ou des déchets plastiques provenant des ordures ménagères, et plus particuliérement, des emballages plastiques. Dans ce dernier cas, les mélanges de polymères contiennent essentiellement des polyoléfines, du polychlorure de vinyle du polystyrène et du polyéthylène téréphthalate.

Les polymères sont ajoutés, en petites quantités (en général de 2 à 10 pourcent en poids) dans les bitumes, sous la forme de mélanges "simples" n'impliquant pas d'interaction ou de réaction chimique entre les constituants, ou sous la forme de mélanges "complexes" impliquant une interaction ou une réaction chimique entre le polymère et certains constituants du bitume (asphaltènes, maltènes, résines...), éventuellement en la présence d'un troisième constituant (catalyseur, réactif). Le plus souvent, les polymères sont dispersés à l'état solide ou fondu dans un excès de bitume préalablement chauffé, et, après agitation, les mélanges sont utilisés tels quels, à l'état fondu, ou refroidis à l'état solide, et éventuellement broyés ou granulés. Certains procédés pour la production d'un mélange, à l'état fondu, de bitumes routiers additionnés de polymères d'oléfines, recommandent l'addition d'au moins 5 à 30 pourcent en poids de particules minérales qui accélèrent la dissolution du polymère dans le bitume (voir, par exemple, le brevet US 3336252 publié le 15.8.1967). Le brevet US 4028293 publié le 7.6.1977 revendique la fabrication d'un matériau bitumé, utilisé notamment dans le domaine routier et la construction, et obtenu par réaction à haute température (au moins à 180°C) d'un composé minéral tel que du sable ou des graviers avec un polymère ou un mélange de polymères provenant de déchets domestiques ou ménagers. Le mélange résultant est ensuite ajouté, à chaud, dans du bitume et refroidi. Un inconvénient majeur de cette méthode est le coût final de l'opération qui nécessite un préchauffage à haute température d'une quantité importante de matière minérale avant l'addition du ou des polymère(s).

La présente invention concerne un procédé simplifié et économique pour le recyclage de déchets polymères dans les bitumes routiers ou industriels. Ce procédé convient particulièrement bien pour le recyclage de "stériles d'automobiles", c'est-à-dire des déchets plastiques provenant de la casse des automobiles, pouvant contenir éventuellement d'autres déchets polymères, en proportion mineure, par exemple provenant de la casse d'appareils électroménagers.

Le nom générique de "stériles d'automobiles" ou de "RBA" (résidus ou rebuts du broyage d'automobiles) désigne en fait l'ensemble des matériaux minéraux et organiques issus du broyage ou du déchiquetage en majorité de carcasses d'automobiles et, dans une moindre mesure, d'appareils électroménagers et de déchets industriels, et obtenus après la séparation des principaux matériaux métalliques, par exemple, à l'aide de tris magnétiques, bar gravitation ou hydrocyclones, par flottation ou manuels. Ces matériaux métalliques récupérés sont couramment recyclés comme matières premières dans l'industrie métallurgique. Par contre, le recyclage des déchets "stériles" ou non-métalliques pose actuellement un problème majeur à cause de l'hétérogénéité du matériau. Il s'agit, en effet, d'un mélange de composition variable et constitué de particules minérales non-métalliques et de divers polymères tels que des expansés ou mousses, des caoutchoucs vulcanisés, des fibres synthétiques, des thermoplastiques et des résines thermodurcies.

Compte tenu de la quantité croissante de matériaux polymères employés lors de la construction des véhicules et des appareils électroménagers, il est devenu nécessaire de trouver de nouveaux moyens pour se débarrasser de ces matériaux "stériles", qui soient satisfaisants, à la fois sur le plan économique et sur le plan écologique, pour la protection de l'environnement. On a déjà proposé de faire disparaitre la majorité des "stériles d'automobiles" par l'incinération, comme dans le cas des ordures ménagères. Si la construction d'usines spécifiques d'incinération pour les "stériles d'automobiles" est possible au niveau technique, elle ne constitue pas actuellement la solution la plus satisfaisante d'un point de vue énergétique et sur le plan financier, compte tenu des sécurités écologiques à assurer notamment pour le dépoussiérage des fumées de combustion et la rétention des émanations de gaz toxiques ou corrosifs. Comme dans le cas des déchets plastiques provenant des emballages et des ordures ménagères, on a également envisagé de recyclage des "stériles d'automobiles" comme matières premières de seconde génération, utilisées seules ou en mélanges avec des matériaux "neufs" de première génération. Néanmoins, étant donné leur composition plus hétérogène, les emplois des "stériles d'automobiles" comme matériaux recyclés sont restés jusqu'à présent très limités et ils ne permettent pas d'envisager une application suffisamment importante pour se débarrasser de quantités croissantes de "stériles". Par conséquent, la plupart des "stériles d'automobiles" sont actuellement déversés dans des décharges protégées, ce qui implique des coûts de stockage de plus en plus élevés et ce qui constitue, malgré toutes les précautions prises, une solution peu satisfaisante pour la protection de l'environnement.

C'est la raison pour laquelle, l'emploi, selon l'invention, de "stériles d'automobiles" pour améliorer les propriétés des bitumes ou asphaltes routiers et industriels constitue un moyen utile et avantageux de recyclage, du moins si l'on dispose d'une technique simple et fiable pour la réalisation des mélanges. Contrairement aux procédés décrits dans l'art antérieur et limités essentiellement au recyclage de déchets plastiques ménagers dans les bitumes, le procédé amélioré selon la présente invention, permet la mise en oeuvre de mélanges plus hétérogènes et complexes de polymères, tels que les "stériles d'automobiles" ou "RBA".

Le bitume (asphalte) utilisé selon la présente invention est un constituant naturel des huiles minérales et des pétroles bruts; il est obtenu par désasphaltage, par exemple par précipitation au propane, ou par distillation de produits de raffinage (pitch) et/ou de craquage de produits pétroliers. Il peut également être obtenu à partir de goudrons issus du charbon.

Sans sortir du cadre de l'invention, on peut utiliser également un bitume fluxé, par exemple, à l'aide de distillats ou résidus aromatiques ou encore un bitume oxydé ou soufflé à l'air.

La principale originalité de la présente invention consiste à valoriser des mélanges complexes de polymères organiques produits lors du déchiquetage et broyage principalement d'automobiles et, dans une moindre mesure, d'appareils électroménagers et de déchets industriels, en les ajoutant aux liants bitumés ou asphaltiques et en améliorant certaines propriétés en vue notamment d'emplois dans les enrobés de matériaux solides tels que les graviers, des enduits ou les revêtements, en particulier dans le domaine routier, la construction, les travaux publics et les équipements spéciaux.

Le mélange de stériles d'automobiles ou autres résidus polymériques équivalents est lavé si nécessaire à l'eau pour éliminer la terre ; il est ensuite soumis à un traitement d'hydrolyse et/ou d'alcoolyse, de manière à transformer au moins une fraction des polyuréthanes des stériles en alcools, isocyanates ou amines et/ou une fraction des polyesters des stériles en acides et alcools. Le traitement consiste à chauffer à une température généralement comprise entre 80 et 200°C, les stériles d'automobiles en présence de 1 à 50 pourcent en poids d'eau, d'alcools, d'aminoalcools, d'amines ou d'acides carboxyliques, par rapport aux poids de stériles, en ajoutant éventuellement un catalyseur tel qu'un hydroxyde de métal alcalin, tel que de la soude ou de la potasse caustique, un sel ou oxyde métallique ou un alcoolate de métal alcalin, par exemple à une concentration de 0,5 à 5 pourcent en poids par rapport au poids de réactif d'hydrolyse ou d'alcoolyse. Le traitement est utilement poursuivi jusqu'à hydrolyse et/ou alcoolyse d'au moins 5 pourcent, de préférence 20 à 90 pourcent, en poids des polyesters et/ou polyuréthanes contenus dans les résidus polymériques.

Le mélange ainsi obtenu est ensuite agité en y ajoutant du bitume fondu, de manière à obtenir un mélange bitumineux contenant de 1 à 80 pourcent en poids de polymères. Le mélange est maintenu au moins durant 5 minutes à une température comprise entre 120 et 230°C. On peut ajouter également de petites quantités, par exemple de 0,5 à 15 pourcent en poids par rapport au poids de polymères, d'un catalyseur tel qu'un acide minéral ou organique et/ou d'un réactif tel qu'un polyanhydride, un polyacide, une polyamine, un polyalcool ou un polyisocyanate, favorisant la condensation "in situ" des acides, alcools, amines ou isocyanates formés lors du prétraitement, ces composés pouvant réagir entre eux ou avec certains constituants du bitume ou de l'asphalte. Ces catalyseurs et réactifs de polycondensation sont bien connus de l'homme de l'art et ils sont préférentiellement ajoutés dans le bitume ou l'asphalte avant l'addition du mélange de polymères prétraités.

Le procédé selon l'invention permet une meilleure incorporation des résines thermodurcies dans le bitume ; il est, par conséquent, très approprié pour l'additivation de bitumes ou asphaltes par les stériles d'automobiles qui contiennent une fraction de résines polyuréthanes, polyesters et/ou polyépoxydes, à une concentration en général comprise entre 4 et 15 pourcent en poids par rapport au poids des stériles organiques.

De préférence, avant l'hydrolyse ou l'alcoolyse, on réduit les résidus polymériques en poudre, les grains ayant une taille moyenne inférieure à 10 mm et de préférence comprise entre 2 à 4 mm.

Sans sortir du cadre de la présente invention, on peut également ajouter un solvant, tel qu'un hydrocarbure aromatique ou halogéné, durant le traitement d'hydrolyse et/ou d'alcoolyse des stériles d'automobiles. Le solvant est ensuite éliminé par distillation ou évaporation avant l'addition du bitume.

Les exemples suivants illustrent l'invention

### EXEMPLE 1

2 kg de stériles d'automobiles préalablement lavés à l'eau pour éliminer la terre, sont malaxés avec 400 ml d'une solution aqueuse 1 Mol. de potasse caustique et le mélange est chauffé dans un réacteur en acier inoxydable à 140°C durant 20 minutes. On ajoute ensuite 4 kg de bitume préalablement fondu et le mélange est agité durant 10 minutes, puis neutralisé par addition d'acide chlorhydrique et l'eau est distillée. On y ajoute 160g de polyéthylèneglycol et 20g d'acide para-toluènesulfonique et le mélange est chauffé à 180°C durant 15 minutes, avant d'être refroidi à la température ambiante.

Le mélange concentré en stériles d'automobiles obtenu dans ces conditions a une apparence homogène et il se dissout rapidement lors de sa dilution dans un excès de bitume.

### EXEMPLE 2

A 5 kg de stériles d'automobiles en grains de moins de 10 mm, on ajoute 0,5 kg d'alcool tertiobutylique et 10g de butylate de sodium dilués dans 1 litre de chlorobenzène et le mélange est agité à 90°C durant 20 minutes ; le solvant est ensuite distillé en chauffant le mélange réactionnel progressivement jusqu'à 160°C. On y ajoute 2,7 kg de bitume et 0,6 kg de toluylène diisocyanate et le mélange est chauffé à 160°C durant 25 minutes afin d'obtenir une composition bitumineuse d'apparence homogène.

Lorsque ce mélange concentré en polymères est ajouté à 100 kg de bitume ayant une température de ramollissement égale à 54°C (mesurée selon la méthode Bille-Anneau ASTM 36), il se disperse rapidement pour donner une formulation de bitume dont la température de ramollissement s'élève à 127°C.

## Revendications

1. Procédé d'obtention d'une composition améliorée de bitume ou d' asphalte renfermant des résidus polymériques, caractérisé en ce que l'on soumet des résidus polymériques constitués au moins en majeure partie par des stériles d'automobiles et contenant au moins des polyuréthanes et/ou des polyesters à un traitement d'hydrolyse et/ou d'alcoolyse effectué à une température comprise entre 80 et 200°C, en présence de 1 à 50 pourcent en poids d'un réactif choisi parmi l'eau, les alcools, les aminoalcools, les amines et les acides carboxyliques, de manière à affecter au moins 5 pourcent en poids desdits polyuréthanes et/ou polyesters; puis on fait réagir les produits d'hydrolyse et/ou d'alcoolyse avec un bitume et/ou un asphalte fondu, en une proportion de 1 à 80 pourcent en poids par rapport à la composition finale, à une température comprise entre 120 et 230°C, pendant au moins 5 minutes.

2. Procédé selon la revendication 1, caractérisé en ce que ledit traitement d'hydrolyse et/ou d'alcoolyse affecte de 20 à 90 pourcent en poids des polyesters et/ou des polyuréthanes contenus dans lesdits résidus polymériques.

3. Procédé selon l'une des revendications 1 et 2, caractérisé en ce qu'on ajoute en outre 0,5 à 5 pourcent en poids par rapport au poids de réactif, d'un catalyseur choisi parmi les sels ou oxydes métalliques et les hydroxydes ou alcoolates de métaux alcalins.

4. Procédé selon l'une des revendications 1 à 3, caractérisé en ce que l'on ajoute au bitume ou a l'asphalte un coréactif choisi parmi les polyanhydrides, les polyacides, les polyamines, les polyalcools et les polyisocyanates avant sa mise en contact avec les produits d'hydrolyse et/ou d'alcoolyse des résidus polymériques.

5. Procédé selon l'une des revendications 1 à 4, caractérisé en ce que l'on ajoute au bitume ou à l'asphalte au moins un catalyseur choisi parmi les acides minéraux ou organiques, pour faciliter la réaction de polycondensation des produits d'hydrolyse et/ou d'alcoolyse des polyesters et/ou des polyuréthanes avec ledit bitume ou ledit asphalte.

6. Procédé selon l'une des revendications 1 à 5, caractérisé en ce que les résidus polymériques renferment de 4 à 15 pourcent en poids de résines polyuréthanes, polyesters et/ou polyépoxydes.

7. Procédé selon l'une des revendications 1 à 6, caractérisé en ce que les résidus polymériques avant hydrolyse et/ou alcoolyse sont réduits en une poudre dont les grains ont une taille moyenne inférieure à 10 mm.

8. Une composition bitumineuse, obtenue selon le procédé de l'une des revendications 1 à 7.

9. Utilisation d'une composition bitumineuse selon la revendication 8 pour formuler des bitumes ou asphaltes routiers ou industriels.

## Patentansprüche

1. Verfahren zur Herstellung einer verbesserten Zusammensetzung von Bitumen oder Asphalt, welche polymere Rückstände umfaßt, dadurch gekennzeichnet, daß man polymere Rückstände, welche wenigstens zum größten Teil aus Automobilabfällen stammen und wenigstens Polyurethane und/oder Polyester enthalten, einer Hydrolyse- und-oder Alkoholysebehandlung unterwirft, welche bei einer Temperatur, die zwischen 80 und 200°C liegt, in Gegenwart von 1 bis 50 Gewichtsprozent eines Reagens, das aus Wasser, Alkoholen, Aminoalkoholen, Aminen, Karbonsäuren ausgewählt ist,bewirkt wird, so daß wenigstens auf 5 Gewichtsprozent der Polyurethane und/oder Polyester eingewirkt wird; dann läßt man die Hydrolyse- und/oder Alkoholyseprodukte mit geschmolzenem Bitumen und/oder Asphalt in einem Verhältnis von 1 bis 80 Gewichtsprozent, bezogen auf die Endzusammensetzung, bei einer Temperatur, die zwischen 120 und 230°C liegt, während wenigstens 5 Minuten reagieren.

2. Verfahren gemäß Anspruch 1, dadurch gekennzeichnet, daß die Hydrolyse- und/oder Alkoholysebehandlung auf 20 bis 90 Gewichtsprozent der in den polymeren Rückständen enthaltenen Polyester und/oder Polyurethane einwirkt.

3. Verfahren gemäß einem der Ansprüche 1 und 2, dadurch gekennzeichnet,daß man außerdem 0.5 bis 5 Gewichtsprozent, bezogen auf das Gewicht des Reagens, eines Katalysators, ausgewählt aus Metallsalzen oder -oxiden und Hydroxiden oder Alkoholaten von Alkalimetallen, zusetzt.

4. Verfahren gemäß einem der Ansprüche 1 bis 3, dadurch gekennzeichnet, daß man vor dem in Kontakt bringen mit den Hydrolyse- und/oder Alkoholyseprodukten der polymeren Rückstände, dem Bitumen oder Asphalt ein Ko-Reagens, ausgewählt aus Polyanhydriden, Polyaciden, Polyaminen, Polyalkoholen und Polyisocyanaten, zusetzt.

5. Verfahren gemäß einem der Ansprüche 1 bis 4, dadurch gekennzeichnet, daß man dem Bitumen oder Asphalt wenigstens einen Katalysator, ausgewählt aus Mineralsäuren oder organischen Säuren, zusetzt, um die Polykondensationsreaktion der Hydrolyse- und/oder Alkoholyseprodukte der Polyester und/oder Polyurethane mit dem Bitumen oder Asphalt zu erleichtern.

6. Verfahren gemäß einem der Ansprüche 1 bis 5, dadurch gekennzeichnet, daß die polymeren Rückstände 4 bis 15 Gewichtsprozent an Polyurethan-, Polyester-, und/oder Polyepoxidharzen umfassen.

7. Verfahren gemäß einem der Ansprüche 1 bis 6, dadurch gekennzeichnet, daß die polymeren Rückstände vor der Hydrolyse und/oder Alkoholyse in ein Pulver übergeführt werden, dessen Körnchen eine mittlere Größe von kleiner 10 mm aufweisen.

8. Bituminöse Zusammensetzung, erhaltem nach dem Verfahren gemäß einem der Ansprüche 1 bis 7.

9. Verwendung einer bituminösen Zusammensetzung gemäß Anspruch 8, um Straßen- oder Industriebitumen oder -asphalt zu formulieren.

## Claims

1. A process for obtaining an improved composition of bitumen or asphalt containing polymer residues, characterised in that polymer residues constituted, at least for the major part, of exhausted car material and containing at least polyurethanes and/or polyesters is subjected to a hydrolysis treatment and/or alcoholizing treatment which is carried out at a temperature of between 80 and 200°C, in the presence of 1 to 50 per cent by weight of a reactant selected from water, alcohols, aminoalcohols, amines and carboxylic acids, in such a way as to affect at least 5 per cent by weight of said polyurethanes and/or polyesters; the products of the hydrolysis and/or alcoholizing treatment(s) are then reacted with a bitumen and/or a molten asphalt in a proportion of 1 to 80 per cent by weight in relation to the final composition, at a temperature of between 120 and 230°C, for at least 5 minutes.

2. A process according to Claim 1, characterised in that said hydrolysis and/or alcoholizing treatment(s) affect(s) 20 to 90 per cent by weight of polyesters and/or polyurethanes contained in said polymer residues.

3. A process according to one of Claims 1 and 2, characterised in that in addition 0.5 to 5 per cent by weight in relation to the weight of the reactant is added of a catalyst selected from the metal salts or oxides and from hydroxides or alcoholates of alkali metals.

4. A process according to one of Claims 1 to 3, characterised in that added to the bitumen or asphalt is a co-reactant selected from polyanhydrides, polyacids, polyamines, polyalcohols and polyisocyanates prior to contacting with the products of the hydrolysis and/or alcoholizing treatments of the polymer residues.

5. A process according to one of Claims 1 to 4. characterised in that added to the bitumen or asphalt is at least one catalyst, selected from the mineral or organic acids, to facilitate the polycondensation reaction of the products of the hydrolysis and/or alcoholizing treatment(s) of the polyesters and/or polyurethanes with said bitumen or asphalt.

6. A process according to one of Claims 1 to 5, characterised in that the polymer residues contain 4 to 15 per cent by weight of polyurethane resins, polyesters and/or polyepoxides.

7. A process according to one of Claims 1 to 6, characterised in that before the hydrolysis and/or alcoholizing treatment(s), the polymer residues are reduced to a powder, the mean grain size of which is less than 10 mm.

8. A bituminous composition obtained using the process of one of Claims 1 to 7.

9. Use of a bituminous composition according to Claim 8 for formulating road or industrial bitumens or asphalts.
